Europäisches Patentamt

(19) **European Patent Office**

Office européen des brevets

(11) Numéro de publication: **0 129 463**

**B1**

(12) **FASCICULE DE BREVET EUROPEEN**

(45) Date de publication du fascicule du brevet: **11.05.88**

(51) Int. Cl.⁴: $G\ 02\ B\ 6/12$, $G\ 02\ B\ 5/30$

(21) Numéro de dépôt: **84401169.2**

(22) Date de dépôt: **06.06.84**

(54) Dispositif polariseur optique intégré et son procédé de fabrication.

(30) Priorité: **17.06.83 FR 8310068**

(43) Date de publication de la demande:
**27.12.84 Bulletin 84/52**

(45) Mention de la délivrance du brevet:
**11.05.88 Bulletin 88/19**

(84) Etats contractants désignés:
**DE GB NL SE**

(56) Documents cités:
FR-A-2 286 396
US-A-3 857 689
US-A-4 284 663
THE TRANSACTIONS OF THE IECE OF JAPAN,
vol. E59, no. 4, avril 1976, page 30, Tokyo, JP;
Y. OKAMURA et al.: "Normal-mode analysis of
semi-leaky type anisotropic thin-film optical
waveguides and their application to thin-film
mode filters"

OPTICS COMMUNICATIONS, vol. 42, no. 2, juin
1982, pages 101-103, Amsterdam, NL; M. DE
MICHELI et al.: "Fabrication and
characterization of titanium indiffused proton
exchanged (TIPE) waveguides in lithium
niobate"

(73) Titulaire: **THOMSON-CSF**
**173, Boulevard Haussmann**
**F-75379 Paris Cédex 08 (FR)**

(72) Inventeur: **Papuchon, Michel**
**THOMSON-CSF SCPI 173, bld Haussmann**
**F-75379 Paris Cedex 08 (FR)**
Inventeur: **Vatoux, Sylvie**
**THOMSON-CSF SCPI 173, bld Haussmann**
**F-75379 Paris Cedex 08 (FR)**

(74) Mandataire: **Lepercque, Jean et al**
**THOMSON-CSF SCPI 19, avenue de Messine**
**F-75008 Paris (FR)**

(56) References cited:
JOURNAL OF PHYSICS E SCIENTIFIC
INSTRUMENTS, vol. 10, no. 3, mars 1977,
pages 197-203, Londres, GB; P.D. TOWNSEND:
"Ion implantation and integrated optics"

EP 0 129 463 B1

Courier Press, Leamington Spa, England.

## Description

La présente invention concerne un dispositif polariseur en optique intégrée, c'est-à-dire réalisé à base d'une structure comprenant un substrat plan dans lequel a été réalisé un guide d'onde.

L'invention concerne également le procédé de fabrication d'un tel dispositif.

Pour de nombreuses applications, il est nécessaire de disposer d'éléments optiques polariseurs. Dans les techniques récentes mettant en oeuvre des fibres optiques et/ou des guides d'onde en optique intégrée, il est en outre nécessaire que ces éléments s'adaptent au mieux à ces structures et à leurs géométries et dimensions particulières pour que des couplages optiques puissent être optimisés.

Les dispositifs destinés à polariser la lumière se répartissent suivant deux familles principales: les dispositifs à absorption sélective en fonction de la polarisation et les dispositifs à séparation spatiale de polarisations.

Des dispositifs du premier type ont été notamment réalisés à base de fibres optiques. A titre d'exemple parmi d'autres, un tel dispositif a été décrit dans l'article de HOSAKA et al: "Single-mode Fiber-Type Polarizer" paru dans la publication "IEEE Transactions on microwave theory and techniques", volume MTT30, n° 10, 1982.

Les polariseurs de ce type comprennent une fibre optique en silice dénudée sur quelques centimètres, à laquelle on fait subir dans cette région dénudée un polissage de manière à ce que l'interface air-silice soit un dioptre plan. On réalise un dépôt métallique sur ce dioptre plan.

On peut toujours diviser l'onde lumineuse guidée en une composante de polarisation quasi transverse-magnétique, et une composante quasi transverse-électrique.

La première composante se couple à un plasmon de l'interface silice-métal, plasmon qui se propage en subissant une forte atténuation. La première composante se trouve donc atténuée de la même façon. La seconde composante, de polarisation transverse-électrique, par contre, ne subit qu'une faible atténuation.

Les taux d'atténuation obtenus sont typiquement de l'ordre de 30 db. Ils dépendent naturellement de la qualité de l'usinage de la fibre optique et de la position exacte de l'interface par rapport à la région de coeur de cette fibre.

Les pertes subies par la seconde composante sont faibles par contre, typiquement de l'ordre de 1 db cm$^{-1}$.

Les dispositifs de la seconde famille, c'est-à-dire les dispositifs à séparation spatiale de polarisations ont été réalisés soit à base d'une structure à fibre optique, soit à base d'une structure à guide d'onde optique intégré sur un substrat. Dans ces deux variantes un cristal biréfringent est disposé sur un dioptre plan voisin soit du coeur pour une fibre optique, soit du guide d'onde intégré.

Lorsqu'il s'agit d'une fibre optique, celle-ci est tout d'abord soumise à un polissage, comme il a été décrit précédemment, pour créer le dioptre plan.

Le cristal biréfringent est choisi de façon à ce qu'une première composante de la lumière de polarisation déterminée, se propage dans ce milieu avec un indice de réfraction supérieur à l'indice effectif de sa propagation guidée et qu'une autre composante, de polarisation orthogonale, se propage avec un indice inférieur.

Dans ces conditions, la première composante n'est plus guidée dans la zone d'interaction avec le cristal biréfringent et se réfracte dans celui-ci. La seconde composante, par contre, reste guidée et traverse la région d'intération sans autres pertes énergétiques que les pertes courantes de transmission dues au guide ou au coeur de la fibre. Ces pertes sont en général négligeables.

Des taux d'atténuation de l'ordre de 60 db ou plus peuvent être obtenus.

Des polariseurs de ce type sont décrits, à titre d'exemples parmi d'autres, dans l'article de BERGH et al: "Single-mode fiber-optic polarizer" paru dans la revue "Optics Letters", vol. 5, n° 11, page 479, 1980, en ce qui concerne un polariseur à fibre optique, dans l'article de UEHARA et al: "Optics Waveguiding polarizer" paru dans la revue "Applied Optics", vol. 13, page 1753, 1974, en ce qui concerne les dispositifs optiques intégrés, ainsi que dans l'article "Normal-Mode analysis of Semi-Leaky Type Anisotropic Thin-Film Optical Waveguides and then Application to Thin-Film Mode Filters" de Y. OKAMURA et al publié dans The Transactions Of The IECE Of Japan, volume E59, numéro 4, avril 1976, page 30. L'article "Fabrication and Characterization of Titanium Indiffused Proton Exchanged (TIPE) waveguides in Lithium Niobate" de M. DE MICHELI et al publié dans Optics Communications, volume 42, numéro 2, juin 1982, pages 101 à 103 décrit un guide d'onde réalisé par une technique d'indiffusion de titane et d'échange protonique, le guide étant formé de manière telle qu'il qui permet, de préférence, la propagation des ondes TE et tend à dissiper les ondes TM.

Les dispositifs de l'art connu qui viennent d'être décrits, bien qu'offrant de bonnes performances, sont cependant de réalisation délicate.

En ce qui concerne les fibres optiques, l'usinage pour obtenir un dioptre plan doit être contrôlé avec une très grande précision lors du polissage. La position du plan du dioptre doit être déterminée avec une précision de l'ordre du micromètre.

Pour les dispositifs à fibre optique et les dispositifs en optique intégrée, il est difficile de disposer, pour toutes les applications, d'un cristal approprié.

En effet, les conditions auxquelles doivent satisfaire les indices de réfraction ne correspondent pas toujours à des cristaux existants, du moins des cristaux d'usinage et d'utilisation aisés.

Enfin, en ce qui concerne les guides d'onde lumineuse réalisés sous forme de structure optique intégrée, ceux-ci sont en général otbenus par des procédés du type diffusion thermique d'un matériau, par exemple du titane, dans une région superficielle d'un substrat plan, par exemple du niobate de lithium. Ce processus peut occasionner une modification de l'état de surface de ce substrat et, corrélativement, il devient plus difficile d'obtenir un bon couplage optique avec le matériau du cristal birefringent disposé sur la surface du substrat et interagissant avec la région de guidage de la lumière. Il est alors de plus souvent nécessaire de recourir à des liquides d'adaptation d'indice insérés entre le cristal biréfringent et la surface du substrat. Il est également difficile de sélectionner des liquides possèdant l'indice de réfraction approprié.

Il y a également lieu de ramarquer que le cristal biréfringent est un élément externe, c'est-à-dire rapporté et non intégré au substrat comme l'est le guide d'onde, ce qui peut être considéré comme un inconvénient supplémentaire.

L'invention est concernée par les dispositifs polariseurs en optique intégrée du second type ci-dessus, c'est-à-dire des dispositifs réalisés sous forme d'une structure optique intégrée opérant par séparation spatiale de polarisations.

L'invention propose une structure palliant les inconvénients de l'art connu.

L'invention a donc pour objet un dispositif polariseur à structure optique intégrée du type opérant par séparation spatiale de polarisations, comprenant un substrat plan, réalisé en un matériau biréfringent présentant un premier indice de réfraction vis à vis d'une onde lumineuse polarisée suivant une première direction et un second indice de réfraction vis à vis d'une onde lumineuse polarisée suivant une seconde direction orthogonale à la première; une première région formant guide d'onde disposée au sein dudit substrat et réalisée par un premier dopage du matériau du substrat propre à modifier lesdits indices de réfraction de manière à assurer la propagation suivant un mode guidé d'une onde lumineuse injectée dans cette région; et des moyens biréfringents pour opérer la séparation spatiale des composantes, polarisées respectivement suivant la première et la seconde desdites directions, de ladite onde lumineuse injectée dans ladite première région, de manière à autoriser la propagation en mode guidé, dans cette première région, de ladite composante polarisée suivant ladite première direction et à provoquer la dissipation par rayonnement vers l'extérieur du guide de ladite composante polarisée suivant ladite seconde direction, caractérisé en ce que lesdits moyens biréfringents pour opérer ladite séparation spatiale des polarisations sont constitués par au-moins une deuxième région disposée dans ledit substrat à proximité, immédiate de ladite première région pour interagir, via son champ évanescent, sur l'onde guidée par cette première région, ladite seconde région étant réalisée par un second dopage du matériau du substrat propre à conférer à cette seconde région des indices de réfraction respectifs $n_{1l}$ et $n_{2l}$ vis à vis d'ondes respectivement polarisées suivant lesdites première et seconde directions qui satisfont simultanément les deux relations suivantes: $n_{1e} > n_{1l}$ et $n_{2e} < n_{2l}$, dans lesquelles $n_{1e}$ et $n_{2e}$ sont les indices de réfraction effectifs associés aux composantes, polarisées respectivement suivant les première et seconde directions, de l'onde guidée par ladite première région.

L'invention a encore pour objet un procédé de fabrication d'un tel dispositif.

L'invention sera mieux comprise et d'autres caractéristiques et avantages apparaîtront à la lecture de la description di-après en référence aux figures annexées et parmi lesquelles:

— la figure 1 représente un dispositif polariseur à structure optique·intégrée de l'art connu,
— les figures 2 et 3 représentent un dispositif conforme à l'invention selon une première variante de réalisation,
— les figures 4 à 7 représentent des variantes supplémentaires de réalisation d'un dispositif selon l'invention.

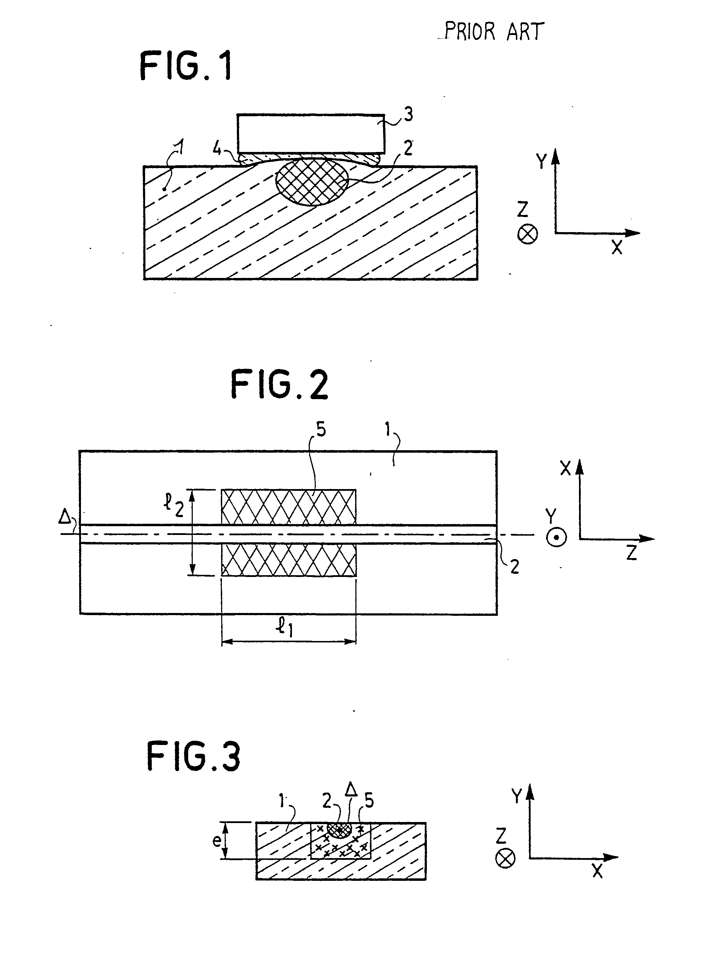

Un exemple connu de dispositif polariseur du type à séparation spatiale des polarisations et comportant une structure formant guide optique intégré dans un substrat va tout d'abord être décrit en relation avec la figure 1.

Ce dispositif est analogue à celui décrit dans l'article précité de UEHARA paru dans la revue "Applied Optics".

Il comprend tout d'abord un substrat plan 1. Dans l'exemple décrit dans l'article précité, il s'agit d'un substrat en verre mais il peut s'agir également d'un cristal tel que le niobate de lithium.

En surface de ce substrat, une structure guidante 2 est créée, par exemple par un procédé de diffusion thermique d'atomes métalliques, de façon à former une bande de quelques micromètres d'épaisseur et de largeur, s'étendant, dans l'exemple illustré, suivant une direction parallèle à un axe, par convention l'axe Z, d'un trièdre orthonormé XYZ.

Pour que cette région forme un guide d'onde, il est nécessaire que cette région possède un indice de réfraction plus élevé que celui du substrat, naturellement pour la longueur d'onde de la lumière à guider, soit supérieur à 1,5 environ s'il s'agit de verre.

Pour que le dispositif fonctionne en élément polarisant, une lame 3 de cristal biréfringent est disposée au dessus du guide d'onde 2. Les axes optiques ordinaire et extraordinaire du cristal peuvvent être parallèles, comme dans l'exemple illustré, respectivement aux axes Y et X. Avec un substrat en verre, la

# 0 129 463

lame de cristal biréfringent peut être constituée à base de calcite, d'indice ordinaire 1,658 et extraordinaire 1,485, pour une longueur d'onde λ de l'ordre de 600 nm.

Dans ces conditions une composante d'onde lumineuse polarisée suivant une direction parallèle à l'axe X reste guidée dans la structure guidante 2 et se propage dans cette structure suivant une direction parallèle à l'axe Z alors qu'une composante d'onde lumineuse polarisée suivant une direction parallèle à l'axe Y n'est plus guidée par la structure 2 et se disperse par diffraction au sein du cristal biréfringent 3.

Dans la réalité, le processus de diffusion introduit des perturbations dans l'état de surface qui se traduisent par une dégradation de la planéité.

Pour obtenir un bon couplage optique entre la lame 3 de cristal biréfringent et la surface du substrat 1 et du guide 2 affleurant à cette surface, il est nécessaire soit d'exécuter un polissage de tolérance typiquement inférieur à λ/50, λ étant la longueur d'onde; soit d'interposer un liquide 4, comme illustré sur la figure 1, dont l'indice est adapté à celui du cristal.

La qualité du couplage optique est critique et conditionne les performances obtenues par ces types de polariseurs.

L'alignement des axes optiques du cristal biréfringent suivant des directions préétablies doit également être réalisé avec précision.

Enfin, il y a nécessité de rapporter un élément extérieur à la structure intégrée de base "substrat-guide d'onde".

Pour pallier les inconvénients de l'art connu, et notamment ceux présentés par le dispositif qui vient d'être rappelé et décrit brièvement, l'invention propose une structure de polariseur entièrement intégrée dans le substrat.

Selon la caractéristique principale de l'invention, on prévoit au sein du matériau formant le substrat au moins une région dopée de façon appropriée, de la manière qui sera décrite ultérieurement, pour former une région d'intéraction.

Cette région intéragit avec l'onde guidée.

Cette dernière, comme il a été rappelé, peut être divisée en deux composantes de directions de polarisations orthogonales entre-elles. Dans ce qui suit, ces deux composantes seront appelées $P_1$ et $P_2$.

Selon un autre aspect de l'invention, le dopant de la région d'intéraction est choisi de manière à ce que, si $n_{1e}$ représente l'indice de réfraction effectif de l'onde guidée pour la composante $P_1$; $n_{1l}$, l'indice de réfraction présenté par la région d'intéraction pour cet état de polarisation; $n_{2e}$, l'indice de réfraction effectif de l'onde guidée pour la composante $P_2$, et $n_{2l}$, l'indice de réfraction présenté par la région d'intéraction pour cet état de polarisation, les deux inégalités suivantes doivent être vérifiées simultanément:

$$n_{1e} > n_{1l} \qquad\qquad (1)$$

$$n_{2e} < n_{2l} \qquad\qquad (2)$$

Dans ces conditions la composante $P_2$ va cesser d'être guidée.

Le taux effectif d'atténuation de cette composante dépend de nombreux paramètres et en particulier de la géométrie de la région d'intéraction, de la distance sur laquelle le couplage optique entre le guide d'onde et la région d'intéraction a une valeur significative, des valeurs respectives des indices figurant dans les inégalités (1) et (2).

On peut notamment montrer, en se basant sur les lois régissent l'optique, que les performances obtenues, c'est-à-dire la valeur du taux d'atténuation de la composante $P_2$, seron d'autant meilleures que, dans l'inégalité (2), $n_{2l}$ est plus proche de $n_{2e}$ tout en lui restant supérieur. On peut donc réécrire cette inégalité pour exprimer ce fait sous la forme:

$$n_{2e} \lesseqgtr n_{2l} \qquad\qquad (2bis)$$

Les figures 2 et 3 illustrent une structure de polariseur conforme à l'invention suivant une première variante, la figure 2 étant une vue de haut et la figure 3 une vue en coupe.

On retrouve des éléments communs à la structure de l'art connu de la figure 1, à savoir un substrat plan 1 et une région 2 formant guide d'onde lumineux d'étendant suivant un axe Δ parallèle par convention à l'un des axes, Z, d'un trièdre orthonormé XYZ.

Par contre, il a été réalisé au sein du substrat 1 une région d'intéraction 5, région ayant, dans la variante représentée aux figures 2 et 3, la configuration générale d'un parallélépipède rectangle disposé symétriquement par rapport à l'axe Δ et à la région 2 formant guide d'onde.

L'intéraction entre l'onde guidée et cette région 5 est effective essentiellement sur une distance $l_1$, représentant dans l'exemple illustré la longueur du parallélépipède suivant l'axe Δ.

La configuration de la région 5 d'intéraction représentée aux figures 2 et 3 n'est pas la seule convenant dans le cadre de l'invention.

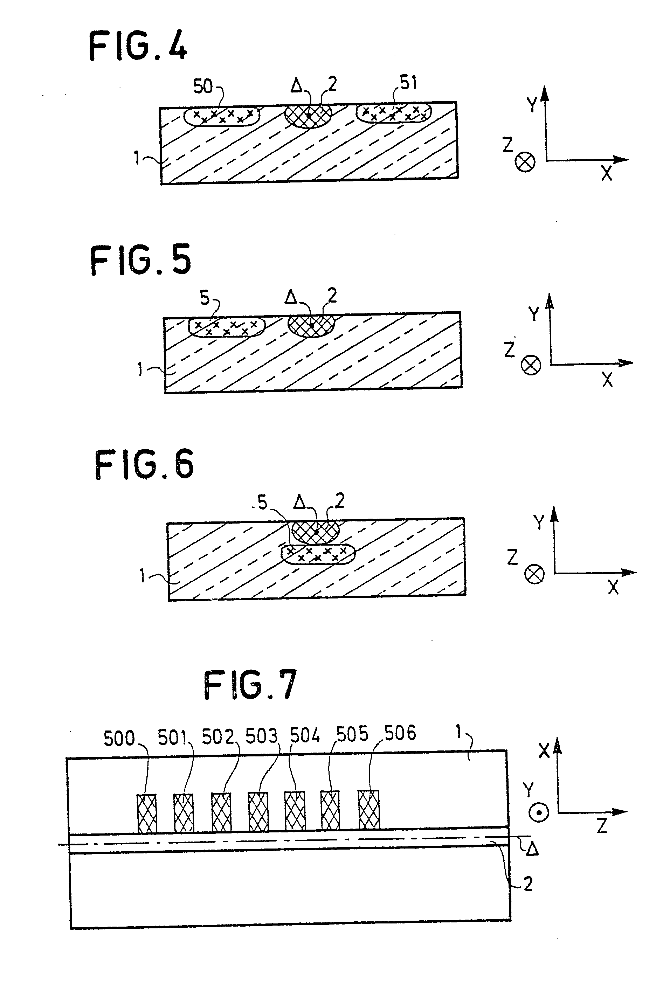

La figure 4 représente une autre configuration possible de région d'intération.

La région d'intération est formé selon cette variante de deux régions distinctes 50 et 51 disposées de part et d'autre de l'axe Δ, de façon symétrique dans l'exemple illustré.

4

La réalisation d'une telle configuration sera décrite ultérieurement de façon plus détaillée, de façon à illustrer plus complètement le procédé de fabrication de dispositifs selon l'invention.

Cette configuration laisse la possibilité de réaliser les régions d'intéraction pendant une étape ultérieure à la réalisation de la structure guidée.

Les deux régions d'intération 50 et 51, comme représenté sur la figure 4 ne sont pas obligatoirement contigües à la région 2 formant guide d'onde, mais doivent être suffisamment proches pour que l'intéraction soit significative. En effet, comme il est connu, dans la région du substrat 1 séparant le guide d'onde 2 et les régions d'intéraction 50 et 51, seule une onde évanescente peut se propager, onde dont l'amplitude décroit exponentiellement. Le taux d'atténuation de la composante $P_2$ dépend donc fortement de la distance séparant est régions 50 et 51 du guide central 2.

Bien que les configurations qui viennent d'être décrites en relation avec les figures 2 à 4, présentent une symétrie par rapport à l'axe Δ, cette condition n'est nullement impérative.

La figure 5 illustre un exemple de configuration asymétrique.

Une seule région d'intéraction 5 est prévue et disposée latéralement au guide d'onde 2.

La région d'intéraction ne doit pas non plus obligatoirement affleurer à la surface du substrat. Bien que plus difficile à réaliser d'un point de vue technologique, la région d'intéraction peut être du type enterré.

La figure 6 illustre une telle disposition. La région d'intéraction 5, contigüe au guide d'onde 2, est disposée au dessous de la région formant guide d'onde 2.

Enfin la zone d'intéraction peut comporter plusieurs régions réparties, régulièrement ou non, le long du guide d'onde 2 (parallèlement à l'axe Z) pour former une structure distribuée, voir périodique.

La figure 7 illustre une telle configuration. Il est prévu, dans cet exemple, sept régions, 500 à 506, disposées asymétriquement par rapport au guide d'onde 2, suivant l'axe Z.

Comme il a été rappelé, les structures qui viennent d'être décrites ne constituent pas des exemples limitatifs. Toutes variations à la portée de l'homme de métier, en particulier des combinaisons entre les configurations décrites, restent dans le cadre de l'invention.

Le procédé de fabrication de telle structures de dispositif polariseur va maintenant être décrit de façon détaillée sur la base de l'exemple de structure particulière représentée à la figure 4.

Le procédé comprend les étapes communes à l'art connu de réalisation du substrat et de la structure guidée au sein de ce substrat.

Le substrat peut être réalisé, à titre d'exemple, à base d'une plaquette de cristal de niobate de lithium, taillé de manière à ce que l'axe optique du cristal soit orthogonal aux faces principales du substrat 1, c'est-à-dire orthogonal au plan XZ selon les conventions adoptées.

Pendant la seconde étape, une bande 2 de quelques micromètres carrés de section est créée au sein du cristal du substrat 1 et affleure en surface. Pour ce faire, par exemple par une méthode de diffusion thermique, un matériau élevant l'indice de réfraction du matériau du substrat est introduit dans celui-ci. Pour le niobate de lithium, on peut choisir le titane. La diffusion s'effectue à une température typique de 1050°C. La largeur de la bande de Titane avant diffusion est de l'ordre de 2 micromètres et son épaisseur de l'ordre de 500Å.

Cette structure est guidante quelque soit l'état de polarisation d'une onde lumineuse injectée par la tranche de la bande 2 ainsi créée.

La lumière se propage donc suivant l'axe Δ sans atténuation importante et ressort par la tranche opposée.

La longueur du guide d'onde 2 et donc de la plaquette-substrat 1 est typiquement de l'ordre de quelques centimètres.

On dispose ensuite à la surface du substrat, pendant une première étape spécifique à l'invention, un masque ne laissant à découvert que des zones de surfaces totales égale à quelque mm². Ce masque peut être constitué d'une mince pellicule d'or.

Ces zones découvertes sont destinées à délimiter des régions qui deviendront les régions d'intéractions 50 et 51. Si l'on se reporte à nouveau à la figure 4, les zones découvertes se présentent sous la forme de deux fenêtres disposées de part et d'autre de la bande formant guide d'onde 2.

Pendant une seconde étape spécifique à l'invention, en dope le matériau du substrat dans les zones d'écouvertes par le masque de manière à créer les régions d'intéraction 50 et 51 par la modification des indices de réfraction ordinaire et extraordinaire de ces régions.

Pour ce faire, on peut échanger des ions du matériau constituant le substrat, les ions lithium dans l'exemple décrit, par des ions hydrogène de manière à modifier les indices de réfraction ordinaire et extraordinaire des régions découvertes.

Ces régions 50 et 51 sont espacées du guide d'onde 2 de quelques micromètres, et ont pour dimensions typiques: longueur (suivant l'axe Z) égale à 8 mm et largeur (suivant l'axe X) égale à 200 micromètres. L'épaisseur est du même ordre de grandeur que celle du guide d'onde 2.

Une méthode pouvant être mise en oeuvre consiste en l'immersion du substrat dans un bain d'acide, par exemple de l'acide benzoïque fondu. Le cristal perd alors des ions de lithium auxquels se substituent des ions d'hydrogène par un processus d'échange ionique.

Outre l'or, la plupart des métaux résistent à cet acide et peuvent servir de masque.

D'autres acides sont utilisables et, selon leurs forces et le temps de réaction, on peut ajuster le dopage

## 0 129 463

des régions découvertes par le masque. En effet, la substitution d'ions, au moins dans les couches superficielles du cristal formant le substrat, peut être totale ou au contraire partielle.

Par ce biais, les indices de réfraction des régions d'interaction peuvent être ajustés et ceci constitue un avantage supplémentaire offert par l'invention.

Si on se reporte aux inégalités (2) et (2 bis), on peut alors obtenir un indice $n_{2i}$ proche de l'indice $n_{2e}$.

Dans le cas d'un dispositif de l'art connu tel que celui décrit en relation avec la figure 1, le choix du cristal détermine une fois pour toute cet indice, pour une orientation du cristal biréfringent déterminée. Il n'est possible de faire varier cet indice qu'en orientant différemment la plaquette de cristal et donc ses axes optiques ordinaire et extraordinaire par rapport à la direction de propagation de l'onde guidée (axe Z), ce qui implique des réglages mécaniques délicats à mette en oeuvre.

Une dernière étape consiste à détruire le masque, si nécessaire, masque qui peut être éliminé de façon usuelle par des moyens chimiques.

L'ordre des étapes peut naturellement être changé si l'on désire réaliser une structure du type de celle illustrée par les figures 2 et 3. Il faut réaliser dans ce cas la région d'intéraction 5 avant la guide d'onde d'onde 2.

A la place d'ions hydrogène, d'autres ions peuvent être utilisés pour modifier les indices de réfractions du substrat, par exemple des ions vanadium, toujours dans l'exemple illustré pour lequel le substrat est en niobate de lithium.

D'autres méthodes telles que la diffusion thermique, on l'implantation ionique peuvent être retenues pour doper le ou les régions d'intéraction. Dans le cas des ions vanadium, on utilise de préférence la diffusion thermique.

A titre d'exemple, pour fixer les idées, un prototype a été réalisé avec un substrat en niobate de lithium, $Li\,Nb\,O_3$; un guide intégré obtenu par dopage avec du titane, $LiNbO_3:Ti$; et des régions d'intéraction dans lequel une substitution partielle d'ions lithium par des ions hydrogène a été effectuée. Dans le cas général, le matériau résultant a une composition de formule $Li_{1-x}H_xNbO_3$, avec $x<1$.

La répartition des indices de réfraction obtenus est conforme au tableau I disposé en fin de description.

Avec cette répartition d'indices, une atténuation d'une composante d'onde lumineuse de direction de polarisation parallèle à l'axe Y de plus de 30 db a été constatée.

Outre l'application directe de l'invention comme dispositif polariseur individuel, c'est-à-dire comme composant optique discret, l'invention peut être mise en oeuvre dans de nombreux autres dispositifs tel que modulateur d'amplitude intégré ou élément isolateur optique, sand modification importante.

En effet, les dispositions propres à l'invention permettent la création d'un mu plusieurs éléments polariseurs intégrés dans des dispositifs existants sans en changer la structure, à la seule condition qu'il existe en guide d'onde intégré dans un substrat. Ces éléments polariseurs se trouvent alors combinés aux autres éléments optiques et cette disposition avantageuse permet une intégration poussée.

### TABLEAU I

| indice de réfraction | substrat 1 | guide d'onde 2 | régions d'intéraction 50 et 51 |
|---|---|---|---|
| polarisation ordinaire | 2,270 | 2,275 | 2,170 |
| polarisation extraordinaire | 2,200 | 2,275 | 2,320 |

## Revendications

1. Dispositif polariseur à structure optique intégrée du type opérant par séparation spatiale de polarisations, comprenant un substrat plan (1) réalisé en matériau biréfringent présentant un premier indice de réfraction vis-à-vis d'une onde lumineuse polarisée suivant une première direction et un second indice de réfraction vis-à-vis d'une onde lumineuse polarisée suivant une second direction orthogonale à la première; une première région (2) formant guide d'onde disposée au sein dudit substrat et réalisée par un premier dopage du matériau du substrat propre à modifier lesdits indices de réfraction de manière à assurer la propagation suivant un mode guidé d'une onde lumineuse injectée dans cette région (2); et des moyens biréfringents (5; 50, 51; 500—506) pour opérer la séparation spatiale des composantes, polarisées respectivement suivant la première et la seconde desdites directions, de ladite onde lumineuse injectée dans ladite première région (2), de manière à autoriser la propagation en mode guidé, dans cette première région (2), de ladite composante polarisée suivant ladite première direction et à provoquer la dissipation par rayonnement vers l'extérieur du guide (2) de ladite composante polarisée suivant ladite seconde direction, caractérisé en ce que lesdits moyens biréfringents pour opérer ladite séparation spatiale des polarisations sont constitués par au moins une deuxième région (5; 50, 51; 500—506) disposée dans ledit substrat à proximité immédiate de ladite première région pour interagir, via son champ évanescent, sur l'onde guidée par cette première région (2), ladite seconde région étant réalisée par un second dopage du matériau du substrat propre à conférer à cette seconde région des indices de réfraction respectifs $n_{1l}$ et $n_{2l}$ vis-à-vis d'ondes respectivement polarisées suivant lesdites première et seconde directions qui satisfont simultanément les deux relations suivantes: $n_{1e} > n_{1l}$ et $n_{2e} < n_{2l}$, dans lesquelles $n_{1e}$ et $n_{2e}$ sont les indices de réfraction effectifs associés aux composantes, polarisées respectivement suivant les première et seconde directions, de l'onde guidée par ladite première région (2).

2. Dispositif suivant la revendication 1, caractérisé en ce que, la première région formant guide d'onde (2) se présentant sous la forme d'un ruban allongé affleurant sur une des faces principales du substrat plan (1) et possèdant un axe de symétrie (Δ) parallèle à ce plan, au sein duquel se propage en mode guidé une onde lumineuse suivant une direction parallèle à l'axe de symétrie (Δ), ladite deuxième région (5; 50, 51; 500—506) a la forme d'un parallélépipède rectangle dont l'un des cotés est parallèle à l'axe de symétrie (Δ).

3. Dispositif suivant la revendication 2, caractérisé en ce qu'il comporte une deuxième région (5) unique jouxtant la première région (2), disposée symétriquement par rapport audit axe de symétrie (Δ), d'épaisseur plus importante que l'épaisseur de la première région et débordant celle-ci de part et d'autre de l'axe de symétrie (Δ) de manière à envelopper la première région sur une distance déterminée ($l_1$) (Figure 3).

4. Dispositif suivant la revendication 2, caractérisé en ce qu'il comporte une deuxième région unique (5) disposée asymétriquement par rapport audit axe de symétrie (Δ) (Figure 5).

5. Dispositif suivant la revendication 2, caractérisé en ce qu'il comporte une deuxième région unique enterrée (5) au sein du substrat (1) (Figure 6).

6. Dispositif suivant la revendication 2, caractérisé en ce qu'il comporte au moins deux deuxièmes régions distinctes (50, 51) disposées de part et d'autre dudit axe de symétrie (Δ) (Figure 4).

7. Dispositif suivant l'une quelconque des revendications 2 à 6, caractérisé en ce qu'il comprend plusieurs deuxièmes régions (500—506) réparties suivant une direction parallèle audit axe de symétrie (Δ) (Figure 7).

8. Dispositif suivant l'une quelconque des revendications 1 à 7, caractérisé en ce que le substrat (1) est en niobate de lithium, en ce que la première région (2) est dopée par insertion d'ions titane; et en ce que chaque deuxième région (5; 50, 51; 500—506) est dopée par substitutions une partie des ions lithium du niobate de lithium par des ions hydrogènes de façon à modifier lesdits indices de réfraction.

9. Dispositif suivant l'une quelconque des revendications 1 à 7, caractérisé en ce que le substrat (1) est en niobate de lithium, en ce que la première région (2) est dopée par insertion d'ions titane; et en ce que chaque deuxième région (5; 50, 51; 500—506) est dopée par diffusion d'ions de vanadium dans le niobate de lithium de façon à modifier lesdits indices de réfraction.

10. Procédé de fabrication d'un dispositif polariseur suivant l'une quelconque des revendications 1 à 9, caractérisé en ce qu'il comprend une étape de réalisation d'un substrat plan (1) en niobate de lithium, une étape de réalisation au sein de ce substrat d'une première région (2) formant guide d'onde optique intégré par insertion d'ions titane dans le niobate de lithium, et une étape de réalisation au sein de ce substrat d'au moins une deuxième région (5; 50, 51; 500—506) disposée à proximité suffisante de ladite première région pour interagir sur l'onde guidée par cette première région, via son champ évanescent, ladite deuxième région étant réalisée par un dopage du niobiate de lithium propre à permettre la modification contrôlée desdits indices de réfraction présentés par cette région de manière à autoriser, par interaction optique sur la première région (2), la propagation en mode guidé dans celle-ci de l'une des composants de l'onde lumineuse incidente polarisée suivant une première direction et à occasionner la dissipation par rayonnement vers l'extérieur du guide de l'autre composante polarisée suivant une seconde direction orthogonale à la première direction.

11. Procédé suivant la revendication 10, caractérisé en ce que l'étape de création de ladite deuxième région (5; 50, 51; 500—506) au sein du substrat (1) comprend une opération de disposition d'un masque à la surface du substrat plan (1) ne laissant subsister qu'une fenêtre délimitant ladite deuxième région; et l'exposition du substrat (1) au travers de cette fenêtre à un bain acide de manière à realiser une substitution controlée de tout ou partie des ions lithium du niobate de lithium situé dans cette deuxième région par des ions hydrogènes.

12. Procédé selon la revendication 11 caractérisé en ce que l'acide est de l'acide benzoïque fondu.

13. Procédé selon la revendication 11 caractérisé en ce que le masque est constitué par une pellicule d'or déposée sur le substrat plan (1).

14. Procédé selon la revendication 10 caractérisé en ce que l'étape de création de ladite deuxième région (5; 50, 51; 500—506) au sein du substrat (1) comprend une opération de diffusion thermique localisée de vanadium pour doper de façon contrôlée le niobate de lithium situé dans cette deuxième région.

**Patentansprüche**

1. Polarisatorvorrichtung mit integrierter optischer Struktur vom Typ, der mit räumlicher Polarisationstrennung arbeitet, mit einem ebenen Substrat (1), das aus einem doppelbrechenden Material verwirklicht ist, welches einen ersten Brechungsindex gegenüber einer Lichtwelle aufweist, die in einer ersten Richtung polarisiert ist, und einen zweiten Brechungsindex gegenüber einer Lichtwelle aufweist, die in einer zweiten, zur ersten senkrechten Richtung polarisiert ist; wobei ein erster Bereich (2), der einen

# 0 129 463

Wellenleiter bildet, im Inneren des genannten Substrats angeordnet und durch eine erste Dotierung des Substratmaterials gebildet ist, die dazu geeignet ist, die genannten Brechungsindizes so zu verändern, daß eine Ausbreitung der in diesen Bereich (2) injizierten Lichtwelle als geführter Wellentype gewährleistet ist; und doppelbrechende Mittel (5; 50, 51; 500—506) zur Bewirkung der räumlichen Trennung der in der ersten bzw. zweiten Richtung polarisierten Komponenten der in den ersten Bereich (2) injizierten Lichtwelle, so daß die Ausbreitung der in der ersten Richtung polarisierten Komponente in diesem ersten Bereich (2) als geführter Wellentyp gestattet wird und die Abführung der genannten, in der zweiten Richtung polarisierten Komponente durch Strahlung zur Außenseite des Leiters (2) verursacht wird, dadurch gekennzeichnet, daß die doppelbrechenden Mittel für die Bewirkung der räumlichen Polarisationstrennung durch wenigstens einen zweiten Bereich (5; 50, 51; 500—506) gebildet sind, welcher in dem Substrat in unmittelbarer Nähe des ersten Bereichs angeordnet ist, um über sein abklingendes Feld mit der durch diesen ersten Bereich (2) geführten Welle in Wechselwirkung zu treten, wobei der genannte zweite Bereich durch eine zweite Dotierung des Substratmaterials gebildet ist, die geeignet ist, um diesem zweiten Bereich Brechungsindizes $n_{1l}$ und $n_{2l}$ gegenüber Wellen zu verleihen, die in der genannten ersten bzw. zweiten Richtung polarisiert sind, wobei gleichzeitig die beiden folgenden Bedingungen erfüllt sind: $n_{1e}>n_{1l}$ und $n_{2e}<n_{2l}$, worin $n_{1e}$ und $n_{2e}$ die effektiven Brechungsindizes sind, welche zu den Komponenten gehören, die in der ersten bzw. zweiten Richtung der durch den ersten Bereich (2) geführten Welle polarisiert sind.

2. Vorrichtung nach Anspruch 1, dadurch gekennzeichnet, daß der erste Bereich, der einen Wellenleiter (2) bildet, die Form eines gestreckten Streifens aufweist, der sich an eine der Hauptflächen des ebenen Substrates (1) anschmiegt und eine zu dieser Ebene parallele Symmetrieachse (Δ) aufweist und in dessen Innerem sich eine geführte Lichtwelle in einer Richtung parallel zur Symmetrieachse (Δ) ausbreitet, wobei der zweite Bereich (5; 50, 51; 500—506) die Form eines rechtwinkligen Quaders aufweist, wovon eine der Seiten parallel zur Symmetrieachse (Δ) ist.

3. Vorrichtung nach Anspruch 2, dadurch gekennzeichnet, daß sie einen einzigen zweiten Bereich (5) aufweist, der neben dem ersten Bereich (2) angeordnet ist und symmetrisch in bezug auf die Symmetrieachse (Δ) liegt, dessen Dicke größer ist als die Dicke des ersten Bereichs und welcher über diesen beiderseits der Symmetrieachse (Δ) hinausragt, so daß er den ersten Bereich über eine bestimmte Strecke (1₁) einhüllt (Figur 3).

4. Vorrichtung nach Anspruch 2, dadurch gekennzeichnet, daß sie einen einzigen zweiten Bereich (5) aufweist, der asymmetrisch in bezug auf die Symmetrieachse (Δ) angeordnet ist (Figur 5).

5. Vorrichtung nach Anspruch 2, dadurch gekennzeichnet, daß sie einen einzigen, vergrabenen zweiten Bereich (5) im Inneren des Substrats (1) aufweist (Figur 6).

6. Vorrichtung nach Anspruch 2, dadurch gekennzeichnet, daß sie wenigstens zwei getrennte zweite Bereich (50, 51) umfaßt, welche beiderseits der Symmetrieachse (Δ) angeordnet sind (Figur 4).

7. Vorrichtung nach einem der Ansprüche 2 bis 6, dadurch gekennzeichnet, daß sie mehrere zweite Bereiche (500—506) umfaßt, die in einer Richtung parallel zur Symmetrieachse (Δ) verteilt sind (Figure 7).

8. Vorrichtung nach einem der Ansprüche 1 bis 7, dadurch gekennzeichnet, daß das Substrat (1) aus Lithiumniobat besteht und daß der erste Bereich (2) durch Einfügung von Titanionen dotiert ist, und daß jeder zweite Bereich (5; 50, 51; 500—506) dotiert ist durch Substitution eines Teiles der Lithiumionen des Lithiumniobats durch wasserstoffhaltige Ionen, durch welche die Brechnungsindizes verändert werden.

9. Vorrichtung nach einem der Ansprüche 1 bis 7, dadurch gekennzeichnet, daß das Substrat (1) aus Lithiumniobat besteht, daß der erste Bereich (2) durch Einfügung von Titanionen dotiert ist; und daß jeder zweite Bereich (5; 50, 51; 500—506) dotiert ist durch Eindiffundieren von Vanadiumionen in das Lithiumniobat, so daß die Brechungsindizes verändert werden.

10. Verfahren zur Herstellung einer Polarisatorvorrichtung nach einem der Ansprüche 1 bis 9, dadurch gekennzeichnet, daß es einen Schritt der Herstellung eines ebenen Substrats (1) aus Lithiumniobat, einen Schritt der Herstellung eines ersten Bereiches (2) im Inneren dieses Substrats, welcher einen integrierten optischen Wellenleiter bildet, durch Einfügen von Titanionen in das Lithiumniobat, und einen Schritt der Herstellung wenigstens eines zweiten Bereichs (5; 50, 51; 500—506) im Inneren dieses Substrats umfaßt, der in ausreichender Nähe von dem ersten Bereich angeordnet ist, um in Wechselwirkung mit der durch diesen ersten Bereich geführten Welle über sein abklingendes Feld zu treten, wobei der zweite Bereich durch eine Dotierung des Lithiumniobats gebildet wird, die geeignet ist, um die gesteuerte Veränderung der Brechungsindizes zu bewirken, welche dieser Bereich aufweist, so daß durch optische Wechselwirkung mit dem ersten Bereich (2) die Ausbreitung einer geführten Wellenkomponente einer der ankommenden Lichtwellenkomponenten, die in einer ersten Richtung polarisiert ist, ermöglicht wird und die Abführung der anderen, in einer zweiten, zur ersten senkrechten Richtung polarisierten Komponente durch Abstrahlung zur Außenseite des Leiters zu verursachen.

11. Verfahren nach Anspruch 10, dadurch gekennzeichnet, daß der Schritt der Herstellung des zweiten Bereiches (5; 50, 51; 500—506) im Inneren des Substrats (1) einen Arbeitsgang umfaßt, bei welchem eine Maske an der Oberfläche des ebenen Substrats (1) angeordnet wird, welche nur ein Fenster freiläßt, das den zweiten Bereich begrenzt; und das Aussetzen des Substrats (1) über dieses Fenster gegenüber einem Säurebad umfaßt, in solcher Weise, daß eine gesteuerte Substitution aller Lithiumionen oder eines Teiles der Lithiumionen des Lithiumniobats, welches sich in diesem zweiten Bereich befindet, durch Wasserstoffionen verwirklicht wird.

8

12. Verfahren nach Anspruch 11, dadurch gekennzeichnet, daß die Säure geschmolzene Benzoesäure ist.

13. Verfahren nach Anspruch 11, dadurch gekennzeichnet, daß die Maske durch eine auf dem ebenen Substrat (1) aufgelegte Goldfolie gebildet ist.

14. Verfahren nach Anspruch 10, dadurch gekennzeichnet, daß der Schritt der Herstellung des zweiten Bereichs (5; 50, 51; 500—506) im Inneren des Substrats (1) einen Arbeitsgang umfaßt, bei welchem eine thermische lokalisierte Diffusion von Vanadium stattfindet, um das Lithiumniobat, welches in diesem zweiten Bereich liegt, gesteuert zu dotieren.

**Claims**

1. Polarizer device having an optical integrated structure of the type operating by spatial separation of polarizations, comprising a plane substrate (1) embodied of a birefringent material having a first index of refraction with respect to a light wave polarized along a first direction and a second index of refraction with respect to a light wave polarized along a second direction which is perpendicular to the first; a first region (2) forming a wave guide being arranged within said substrate and embodied by a first doping of the substrate material appropriate to modify said indices of refraction in a manner to ensure the guided mode propagation of a light wave injected into this region (2); and birefringent means (5; 50, 51; 500—506) for performing the spatial separation of the components of said light wave injected into said first region (2) and polarized along the first and second directions, respectively, in a manner to authorize the guided mode propagation within this first region (2) of said component polarized along said first direction and to cause the dissipation of said component polarized along said second direction by radiation towards the exterior of the guide (2), characterized in that said birefringent means for performing said spatial separation of the polarizations are formed by at least a second region (5; 50, 51; 500—506) arranged within said substrate in the immediate neighborhood of said first region to interact, through its evanescent field, with the wave guided by this first region (2), said second region being embodied by a second doping of the substrate material appropriate to impart to this second region respective indices of refraction $n_{1l}$ and $n_{2l}$ with respect to waves respectively polarized along said first and second directions and which simultaneously satisfy the following two relations: $n_{1e} > n_{1l}$ and $n_{2e} < n_{2l}$, wherein $n_{1e}$ and $n_{2e}$ are effective indices of refraction associated with the components respectively polarized along the first and second directions, of the wave guided by said first region (2).

2. Device according to claim 1, characterized in that, the first region forming a wave guide (2) is shaped as an elongated strip lying flush on one of the main faces of the plane substrate (1) and having a symmetry axis ($\Delta$) which is parallel to this plane, and wherein a guided light wave propagates along a direction parallel to the symmetry axis ($\Delta$), said second region (5; 50, 51; 500—506) has the shape of a rectangular parallelepiped one of the sides of which is parallel to the symmetry axis ($\Delta$).

3. Device according to claim 2, characterized in that it comprises a second, single region (5) adjacent the first region (2) and arranged symmetrically with respect to said symmetry axis ($\Delta$), and having a thickness which is greater than the thickness of the first region, and which extends beyond the latter on both sides of the symmetry axis ($\Delta$) in a manner to enclose the first region along a determined distance ($l_1$) (Figure 3).

4. Device according to claim 2, characterized in that it comprises a second single region (5) arranged asymmetrically with respect to said symmetry axis ($\Delta$) (Figure 5).

5. Device according to claim 2, characterized in that it comprises a second single region (5) buried within the substrate (1) (Figure 6).

6. Device according to claim 2, characterized in that it comprises at least two distinct second regions (50, 51) arranged on both sides of said symmetry axis ($\Delta$) (Figure 4).

7. Device according to any of claims 2 to 6, characterized in that it comprises a plurality of second regions (500—506) distributed along a direction which is parallel to said symmetry axis ($\Delta$) (Figure 7).

8. Device according to any of claims 1 to 7, characterized in that the substrate (1) is of lithium niobate, in that the first region (2) is doped by insertion of titanium ions; and in that each second region (5; 50, 51; 500—506) is doped by substitution of a portion of the lithium ions of the lithium niobate by hydrogenated ions in a manner to modify said indices of refraction.

9. Device according to any of claims 1 to 7, characterized in that the substrate (1) is of lithium niobate, in that the first region (2) is doped by insertion of titanium ions; and in that each second region (5; 50, 51; 500—506) is doped by diffusion of vanadium ions into the lithium niobate in a manner to modify said indices of refraction.

10. Method of producing a polarizer device according to any of claims 1 to 9, characterized in that it comprises a step of preparing a plane substrate (1) of lithium niobate, a step of forming a first region (2) within this substrate to form an optical integrated wave guide by insertion of titanium ions into the lithium niobate, and a step of forming a second region (5; 50, 51; 500—506) within this substrate located sufficiently close to said first region to interact with the wave guided by this first region through its evanescent field, said second region being embodied by a doping of the lithium niobate which is appropriate to permit the controlled modification of said indices of refraction presented by this region in a manner to authorize, by optical interaction with the first region (2), the guided mode propagation within the latter of at least one of the components of the incident light wave which is polarized along a first direction and to cause the dissipation of the other component polarized along a second direction which is perpendicular to the first direction, by radiation towards the outside of the guide.

11. Method according to claim 10, characterized in that the step of forming said second region (5; 50, 51; 500—506) within the substrate (1) comprises an operation of arranging a mask on the surface of the plane substrate (1) leaving only a window which defines said second region; and the exposition of the substrate (1) to an acid bath through this window in a manner to perform a controlled substitution of all of or a portion of the lithium ions of the lithium niobate located within this second region by hydrogen ions.

12. Method according to claim 11, characterized in that the acid is molten benzoic acid.

13. Method according to claim 11, characterized in that the mask is formed of a gold foil deposited on the plane substrate (1).

14. Method according to claim 10, characterized in that the step of forming said second region (5; 50, 51; 500—506) within the substrate (1) comprises an operation of thermal localized diffusion of vanadium to dope the lithium niobate located within said second region in controlled manner.

# FIG.1

# FIG.2

# FIG.3

1

# FIG. 4

# FIG. 5

# FIG. 6

# FIG. 7